# EUROPÄISCHE PATENTSCHRIFT

(11) **EP 1 566 550 B1**
(45) Veröffentlichungstag und Bekanntmachung des Hinweises auf die Patenterteilung: **26.09.2007**
(21) Anmeldenummer: 05000446.4
(22) Anmeldetag: 12.01.2005
(51) Int. Cl.: F15B 13/00, F15B 21/04

(54) **Vorrichtung zur pneumatischen Steuerung**
Pneumatic control device
Dispositif de commande pneumatique

(30) Priorität: 20.02.2004 DE 102004008490
(43) Veröffentlichungstag der Anmeldung: 24.08.2005
(73) Patentinhaber: SIG Technology Ltd., 8212 Neuhausen Rhine Falls (CH)
(72) Erfinder: Litzenberg, Michael, 21502 Geesthacht (DE)
(74) Vertreter: Klickow, Hans-Henning

(56) Entgegenhaltungen:
- DE-A1- 2 352 926
- DE-A1- 4 212 583
- DE-A1- 4 340 291
- US-A- 3 465 772
- US-A- 4 188 976
- US-A- 5 884 664
- US-B1- 6 293 310

## Beschreibung

Die Erfindung betrifft eine Vorrichtung zur Blasformung von Behältern, die mindestens eine Blasstation aufweist, die mit einer Blasform versehen ist und bei der die Blasstation an eine Einrichtung zur pneumatischen Steuerung angeschlossen ist, die ein Basiselement aufweist, das eine Mehrzahl von pneumatischen Funktionsmodulen haltert.

Derartige Einrichtungen zur pneumatische Steuerung werden beispielsweise als sogenannte Wartungseinheiten bei der Herstellung von blasgeformten Behältern eingesetzt, um eine mit der Durchführung des Blasvorganges koordinierte zuleitung eines oder mehrerer Blasdrücke vorgeben zu können und um für die realisierten pneumatischen Steuerungen und pneumatischen Funktionen die erforderlichen Druckluftverteilungen, Druckanzeigen sowie weitere Hilfsfunktionen bereitstellen zu können.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet

Aus der US-A-3,465,772 ist bereits eine Vorrichtung zur pneumatischen Steuerung bekannt, bei der eine Mehrzahl von pneumatischen Funktionsmodulen von einem Basiselement gehaltert werden. Das Basiselement ist als ein pneumatischer Verteiler ausgebildet. Die Funktionsmodule werden in ein U-Profil als Halter eingeschoben und rasten hier über federbelastete Kugeln ein.

Aus der US-B1-6,293,310 ist eine Steuereinrichtung für Gasströmungen bekannt, die aus einer Vielzahl von Funktionsmodulen ausgebildet ist, die auf einem Basiselement montiert werden. Das Basiselement ist mit Versorgungsleitungen für einen Anschluß der Funktionsmodule versehen.

In der US-A-5,884,664 wird eine weitere Steuereinrichtung beschrieben, bei der eine Vielzahl von Funktionsmodulen im Bereich eines Basiselementes angeordnet werden. Das Modulsystem ist insbesondere zur Verwendung bei Vakuumanlagen geeignet.

Die bekannten Vorrichtungen zur pneumatischen Steuerung sind insbesondere bei der Verwendung von größeren Drücken im Bereich bis zu 40 bar sowie bei strömenden Druckluftmengen in einer Größenordnung von 20 bis 100 m³ pro Stunde noch nicht dazu in der Lage, alle Anforderungen an eine einfache Montierbarkeit sowie Demontierbarkeit bei gleichzeitig hoher Funktionalität zu erfüllen.

Aufgabe der vorliegenden Erfindung ist es daher, eine Vorrichtung der einleitend genannten Art derart zu konstruieren, daß eine verbesserte Montagefreundlichkeit bereitgestellt wird.

Diese Aufgabe wird erfindungsgemäß dadurch gelöst, daß das Basiselement als ein pneumatischer Verteiler ausgebildet ist, der mindestens einen mindestens zwei Anschlußstellen miteinander verbindenden Versorgungskanal aufweist und daß im Bereich mindestens einer Anschlußstelle mindestens eines der Funktionsmodule anordbar ist und daß das Basiselement und mindestens eines der Funktionsmodule sowohl von einer Grobjustierung als auch von einer Endlagenfixierung miteinander verbunden sind sowie bei der eine den Funktionsmodulen zugewandte Frontseite des Basiselementes derart angeordnet ist, daß von der Schnelljustierung eine vertikale Positionierung des Funktionsmoduls vorgegeben ist.

Durch die Ausbildung des Basiselementes als Grundmodul, das mit Anschlußstellen für die Funktionsmodule verbunden ist, ist es möglich, ein stark modularisiertes System bereitzustellen, das insbesondere einen Austausch von Funktionsmodulen mit geringem Arbeitsaufwand unterstützt. Derzeitige als wartungseinheiten ausgebildete Vorrichtungen zur pneumatischen Steuerung erfordern es in der Regel, alle verwendeten Funktionsmodule voneinander zu lösen und nach einem Austausch des defekten Funktionsmoduls wieder miteinander zu verbinden. Durch die Anordnung der Anschlußstellen für die Funktionsmodule direkt am Basiselement sind Arbeiten ausschließlich am jeweils betroffenen Funktionsmodul erforderlich, ohne daß die weiteren Funktionsmodule hiervon betroffen werden.

Die kombinierte Halterung der Funktionsmodule am Basiselement sowohl unter Verwendung einer Schnelljustierung als auch unter Verwendung einer Endlagenfixierung unterstützt insbesondere eine Montage und Demontage von Funktionsmodulen für leistungsfähige pneumatische Steuerungen. Beispielsweise werden bei Wartungseinheiten für Blasmaschinen Ventileinheiten als Funktionsmodule verwendet, deren Gewicht im Bereich von 5 bis 10 kg liegt. Darüber hinaus kommen als Filter ausgebildete Funktionsmodule zum Einsatz, die eine Höhe von etwa 50 cm sowie einen Durchmesser von etwa 25 cm aufweisen.

Durch die erfindungsgemäße Schnelljustierung ist es möglich, das Funktionsmodul zunächst im Bereich des Basiselementes grob zu fixieren und den jeweiligen Monteur davon zu entlasten, eine manuelle Halterung des Funktionsmoduls vornehmen zu müssen. Eine endgültige Montage und Befestigung des Funktionsmoduls am Basiselement unter Verwendung der Endlagenfixierung kann dann zweihändig und ohne Beeinträchtigungen durch ein manuell zu halterndes Gewicht des Funktionsmoduls erfolgen.

Die Halterung einer Mehrzahl von Funktionsmodulen wird dadurch unterstützt, daß sich der Versorgungskanal mindestens bereichsweise mit einer Ausdehnungskomponente in Richtung einer Längsachse des Basiselementes erstreckt.

Insbesondere erweist es sich für eine gute Zugänglichkeit als vorteilhaft, daß eine Mehrzahl von Anschlußstellen in Richtung der Längsachse hintereinander angeordnet sind.

Eine Montage und Demontage der Funktionsmodule bei einem frontalen Zugang wird dadurch unterstützt, daß mindestens zwei Anschlußstellen auf einer Frontseite des Basiselementes nebeneinander angeordnet sind.

Die modulare Konstruktion wird auch dadurch unterstützt, daß der Versorgungskanal mindestens bereichsweise innerhalb des Basiselementes verläuft und in im Bereich der Anschlußstellen angeordnete Anschlüsse einmündet.

Eine einfache fertigungstechnische Herstellung des Versorgungskanals wird dadurch unterstützt, daß der Versorgungskanal aus mindestens zwei Bohrungen ausgebildet ist, die ausgehend von zwei benachbarten Anschlußstellen schräg in das Basiselement hinein verlaufen.

Eine einfache Handhabung bei der Montage und Demontage wird dadurch unterstützt, daß die Schnelljustierung als eine Einhängeeinrichtung ausgebildet ist.

Ebenfalls ist es möglich, daß die Schnelljustierung als eine Einsteckeinrichtung ausgebildet ist.

Darüber hinaus ist daran gedacht, daß die Schnelljustierung als eine Einrastvorrichtung ausgebildet ist.

Eine weitere Variante zur Realisierung der Schnelljustierung besteht darin, daß die Schnelljustierung als eine Magnetvorrichtung ausgebildet ist.

Bei einer Montage von schweren Funktionsmodulen ist insbesondere daran gedacht, daß die Endlagenfixierung als Verschraubung ausgebildet ist.

Darüber hinaus ist es auch möglich, daß die Endlagenfixierung als Verklemmung ausgebildet ist.

Eine weitere Ausführungsvariante besteht darin, daß die Endlagenfixierung als Verspannung ausgebildet ist.

Eine typische Ausbildung des Funktionsmoduls besteht darin, daß das Funktionsmodul als Schaltventil ausgebildet ist.

Ebenfalls ist es möglich, daß das Funktionsmodul als Filter ausgebildet ist.

Darüber hinaus ist daran gedacht, daß das Funktionsmodul als Regelventil ausgebildet ist.

Gemäß einer anderen Ausführungsvariante ist vorgesehen, daß das Funktionsmodul als Druckbegrenzer ausgebildet ist.

Eine weitere Ausführungsmöglichkeit besteht darin, daß das Funktionsmodul als Entlüftung ausgebildet ist.

Zur Unterstützung einer Druckmessung ist vorgesehen, daß das Funktionsmodul als Manometer ausgebildet ist.

Eine andere Meßvariante besteht darin, daß das Funktionsmodul als Differenzdruckmanometer ausgebildet ist.

Zur Erfassung einer Luftfeuchtigkeit wird vorgeschlagen, daß das Funktionsmodul als Taupunktsensor ausgebildet ist.

Eine einfache Handhabung wird dadurch unterstützt, daß das Basiselement einteilig ausgebildet ist.

Zur Anpassung der räumlichen Gesamtausdehnung an konkret vorliegende Einsatzanforderungen ist vorgesehen, daß das Basiselement aus mindestens zwei in Richtung der Längsachse hintereinander angeordneten Elementsegmenten ausgebildet ist.

Eine typische Anwendung wird dadurch definiert, daß das Basiselement als Montagesockel einer Wartungseinheit ausgebildet ist.

Insbesondere ist daran gedacht, daß das Basiselement als Teil einer Blasmaschine ausgebildet ist.

Eine Anwendung mit der Notwendigkeit zur Handhabung einer Mehrzahl von schweren Funktionsmodulen besteht darin, daß mindestens eines der Funktionsmodule zur Steuerung der Blasluftversorgung einer Blasstation ausgebildet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung einer als wartungseinheit ausgebildeten Vorrichtung zur pneumatischen Steuerung,
- Fig. 6: eine Draufsicht auf ein Basiselement einer Vorrichtung zur pneumatischen Steuerung mit drei Anschlußstellen für Funktionsmodule,
- Fig. 7: eine teilweise Darstellung eines Horizontalschnittes gemäß Schnittlinie VII-VII in Fig. 6,
- Fig. 8: eine Seitenansicht gemäß Blickrichtung VIII in Fig. 6,
- Fig. 9: eine Draufsicht gemäß Blickrichtung IX in Fig. 6 und
- Fig. 10: eine vergrößerte Querschnittdarstellung zur Veranschaulichung eines Einhängens des Funktionsmoduls mit einem hakenartigen Vorsprung in eine nutartige Vertiefung des Basiselementes, wobei der Vorsprung und die Vertiefung eine Schnellfixierung bereitstellen und wobei von einer Verschraubung eine Endlagenfixierung gebildet ist.

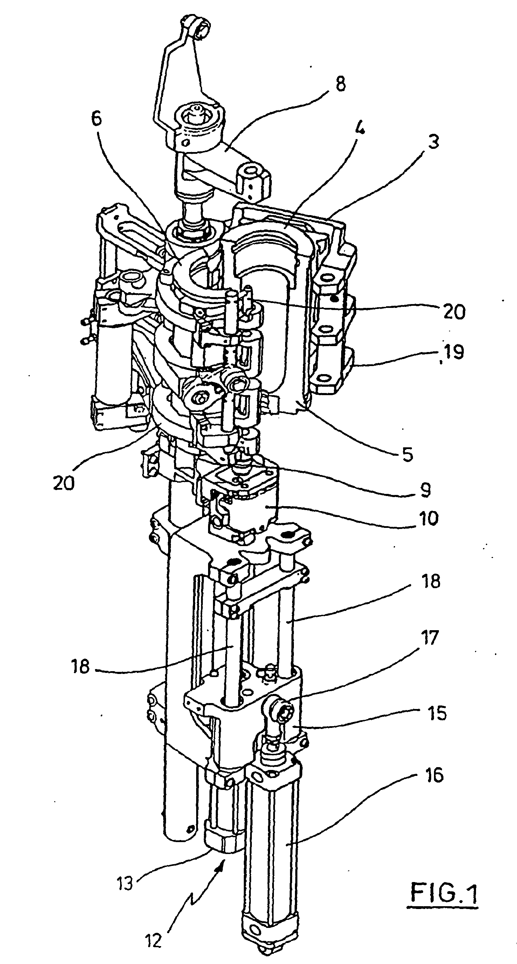

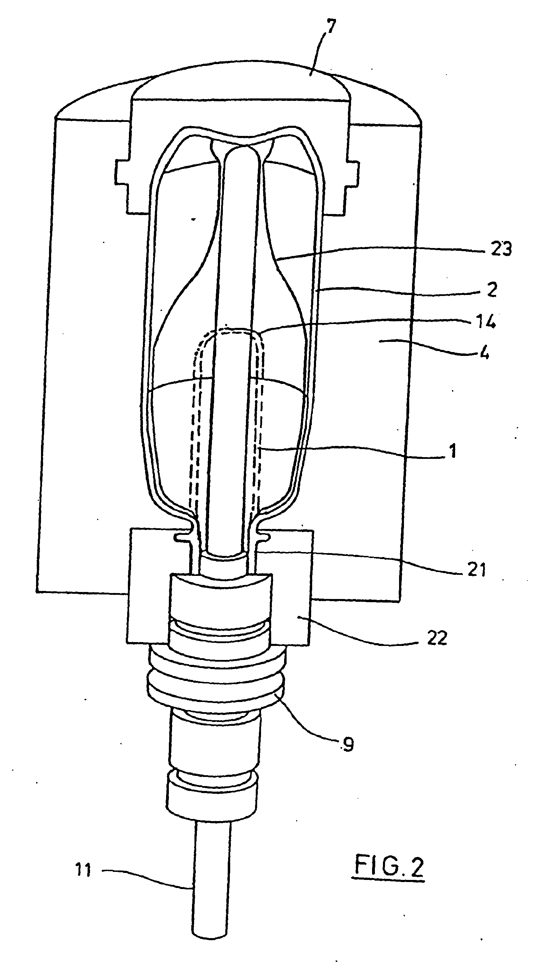

Eine Verwendung der Vorrichtung zur pneumatischen Steuerung kann beispielsweise zur Steuerung der Blasluftzuführung bei einer Vorrichtung zur Blasformung erfolgen. Der prinzipielle Aufbau einer Vorrichtung zur Umformung von vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

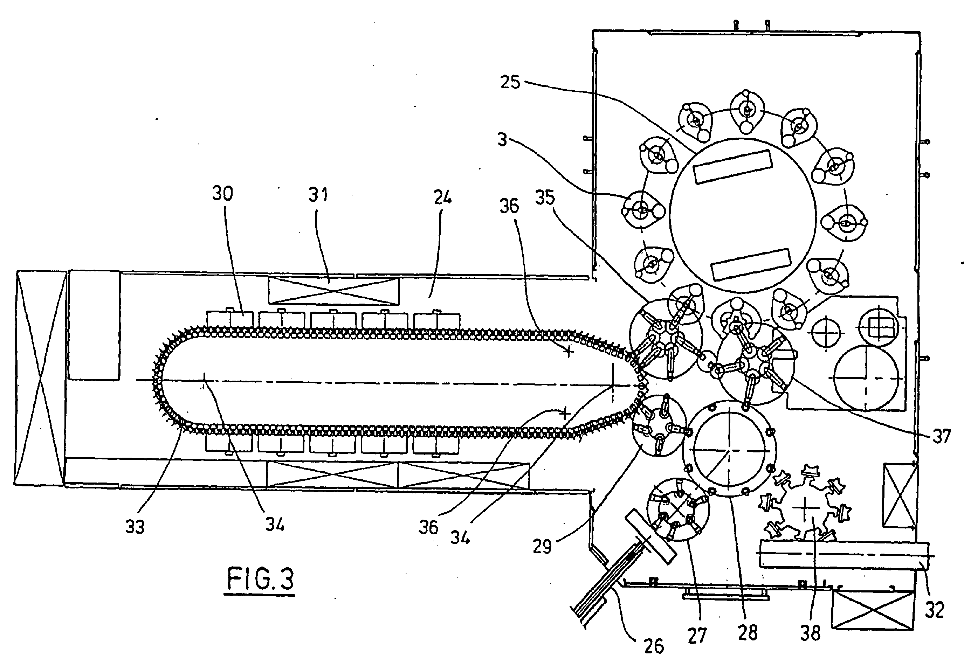

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

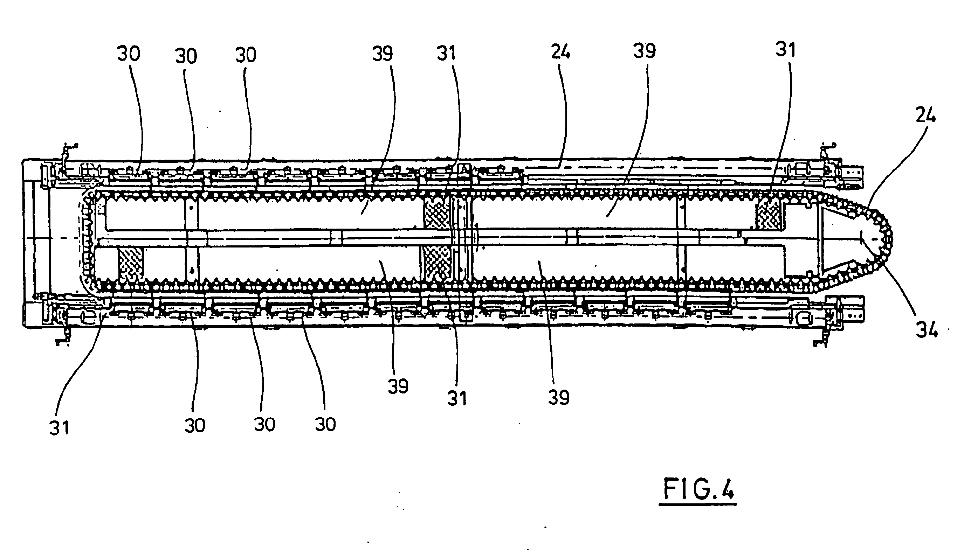

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

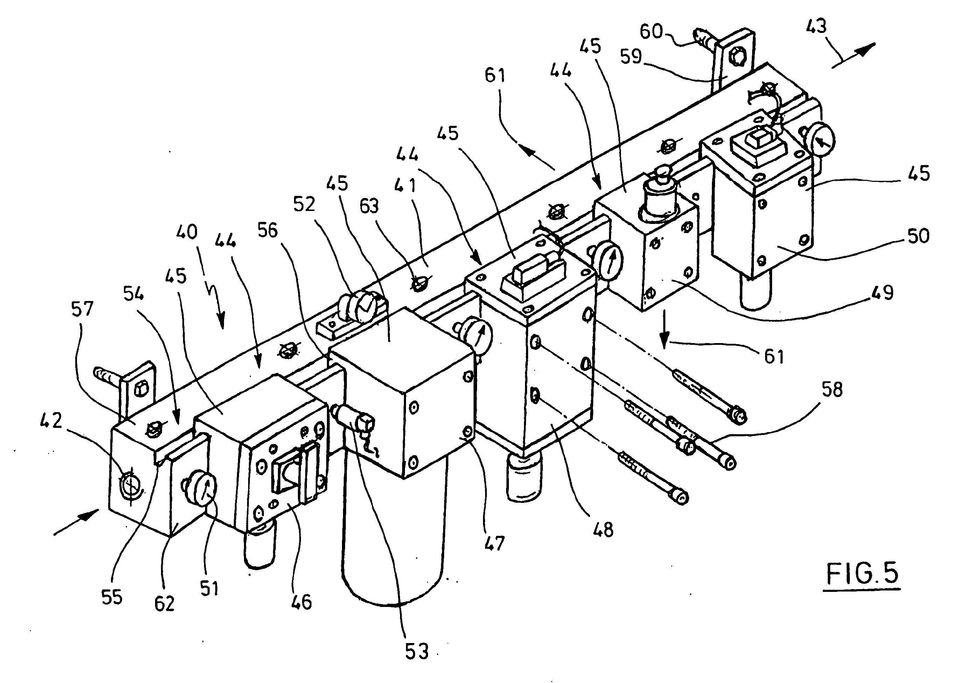

Fig. 5 zeigt eine als Wartungseinheit (40) ausgebildete vorrichtung zur pneumatischen Steuerung. Ein Basiselement (41) ist mit einer Druckluftzuleitung (42) sowie einer Druckgasableitung (43) versehen. Die Druckgasableitung (43) dient dazu, eine Mehrzahl von Basiselementen (41) reihenartig aneinanderzufügen. Das Basiselement (41) ist mit einer Mehrzahl von Anschlußstellen (44) versehen, in deren Bereich Funktionsmodule (45) anordbar sind. Die Funktionsmodule (45) können beispielsweise als Schaltventile (46), Filter (47), Regelventile (48), Druckbegrenzer (49) oder als Entlüftung (50) ausgebildet sein. Weitere Realisierungsformen können als Manometer (51), Differenzdruckmanometer (52) oder als Taupunktsensor (53) erfolgen.

Zur Ermöglichung einer Grobmontage sind die Funktionsmodule und das Basiselement (41) von einer Schnelljustierung (54) miteinander verbunden. Bei der Ausführungsform gemäß Fig. 5 besteht die Schnelljustierung (54) aus einer nutartigen Vertiefung (55) im Bereich des Basiselementes (41) sowie in die Vertiefung (55) eingreifenden Vorsprüngen (56) der größeren Funktionsmodule (45). Die Vertiefung (55) erstreckt sich entlang einer oberen Begrenzungsfläche des Basiselementes (41) und die Funktionsmodule (45) können mit ihren Vorsprüngen (56) zur Realisierung der Grobmontage in die Vertiefung (55) eingehängt werden.

Eine abschließende Befestigung der Funktionsmodule (45) erfolgt unter Verwendung einer Endlagenfixierung (58), die beim dargestellten Ausführungsbeispiel über Schraubenbolzen realisiert ist, die sich durch die Funktionsmodule (45) hindurch erstrecken und in das Basiselement (51) eingeschraubt sind.

Eine Befestigung des Basiselementes (43) im Bereich eines nicht dargestellten Trägers kann unter Verwendung von Haltern (59) erfolgen, die beispielsweise unter Verwendung von Schrauben (60) mit dem Träger verbunden werden. Der Druckbegrenzer (49) kann als ein Druckbegrenzungsventil ausgebildet sein, das einen oder mehrere separate Abgänge (61) aufweist.

Die Anschlußstellen (44) sind vorzugsweise im Bereich einer Frontseite (62) des Basiselementes (41) angeordnet. Für kleinere Funktionsmodule (45) können aber auch gesonderte Anschlüsse (63) im Bereich der oberen Begrenzungsfläche (57) angeordnet sein. Beim Ausführungsbeispiel gemäß Fig. 5 ist das Differenzdruckmanometer (52) im Bereich eines Anschlusses (63) der oberen Begrenzungsfläche (57) angeordnet.

Für kleinere Funktionsmodule (45) mit relativ geringem Baugewicht sind zwischen den Anschlußstellen (44), die für eine Montage von Funktionsmodulen (45) mit Schnelljustierung vorgesehen sind, weitere Anschlüsse angeordnet. Für eine derartige Konstruktion können auf einem vergleichsweise geringen Bauvolumen eine große Anzahl von Funktionsmodulen (45) montiert werden.

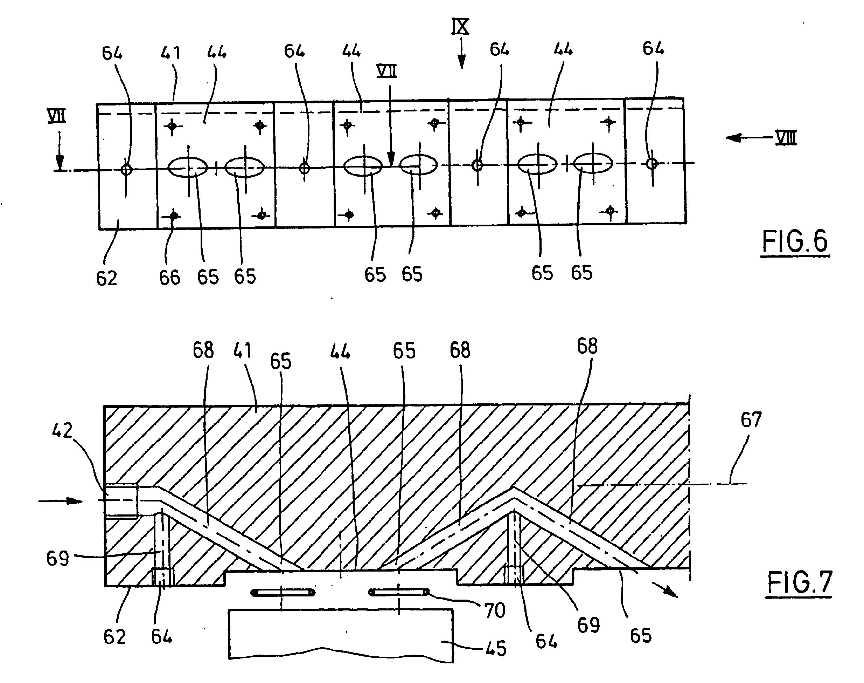

Fig. 6 zeigt eine Seitenansicht des Basiselementes (41) mit Blick auf die Frontseite (62). Im dargestellten Grundzustand sind keine Funktionsmodule im Bereich des Basiselementes (41) montiert. Zu erkennen sind die Anschlüsse (64) im Bereich der Frontseite (62) zur Montage von kleineren Funktionsmodulen (45) sowie jeweils zwei Anschlüsse (65) im Bereich der Anschlußstellen (44). Jeweils einer der Anschlüsse (65) verbindet die Anschlußstelle (44) mit einer in Richtung der Druckluftzuführung benachbarten Anschlußstelle (44) bzw. direkt mit der Druckgaszuführung (42). Der andere Anschluß (65) verbindet die Anschlußstelle (44) mit einer in Richtung auf die Druckgasableitung (43) benachbarten Anschlußstelle (44) bzw. direkt mit der Druckgasableitung (43).

Zu erkennen sind in Fig. 6 auch die als Teil der Endlagenfixierung (58) ausgebildeten Gewindebohrungen (66) im Bereich des Basiselementes (41), in die die in Fig. 5 darstellten Schraubenbolzen einschraubbar sind.

Fig. 7 veranschaulicht in einem Horizontalschnitt den Verlauf der Anschlüsse (65). Es ist insbesondere zweckmäßig, daß die Anschlüsse (65) jeweils relativ zu einer Längsachse (67) des Basiselementes (41) schräg verlaufende Bohrungen (68) aufweisen. Die Bohrungen (68) von zwei zueinander benachbarten Anschlußstellen (44) sind jeweils winklig miteinander verbunden. Im Ausführungsbeispiel gemäß Fig. 7 sind die winkligen Überleitungen der Bohrungen (68) ineinander bzw. die Überleitungen von Bohrungen (68) in die Druckgaszuführung (42) bzw. die Druckgasableitung (43) jeweils im Bereich von Querbohrungen (69) angeordnet, die ausgehend von den Anschlüssen (64) in das Basiselement (61) hinein verlaufen.

Jeder Anschlußstelle (44) sind somit zwei Anschlüsse (65) mit jeweils korrespondierender Bohrung (68) zugeordnet. Eine derartige Anordnung vermeidet innerhalb des Basiselementes (42) in Richtung der Längsachse (67) verlaufende lang konturierte Verbindungskanäle, die nur relativ aufwendig zu fertigen sind.

Zur Vermeidung von Druckverlusten sind zwischen den Funktionsmodulen (45) und den Anschlüssen (65) jeweils Dichtungen (70) angeordnet, die beispielsweise als Dichtungsringe ausgebildet sein können. Für den Fall, daß im Bereich einer bestimmten Anschlußstelle (44) kein Funktionsmodul (45) angeordnet werden soll, wird an der betreffenden Anschlußstelle (44) ein die beiden Anschlüsse (65) miteinander verbindendes Überleitungselement positioniert, das hinsichtlich seiner Befestigung aber konstruktiv an die Funktionsmodule (45) angepaßt gestaltet sein kann, so daß auch für diese Bauteile das gleiche Befestigungsprinzip wie für die Funktionsmodule (45) verwendbar ist.

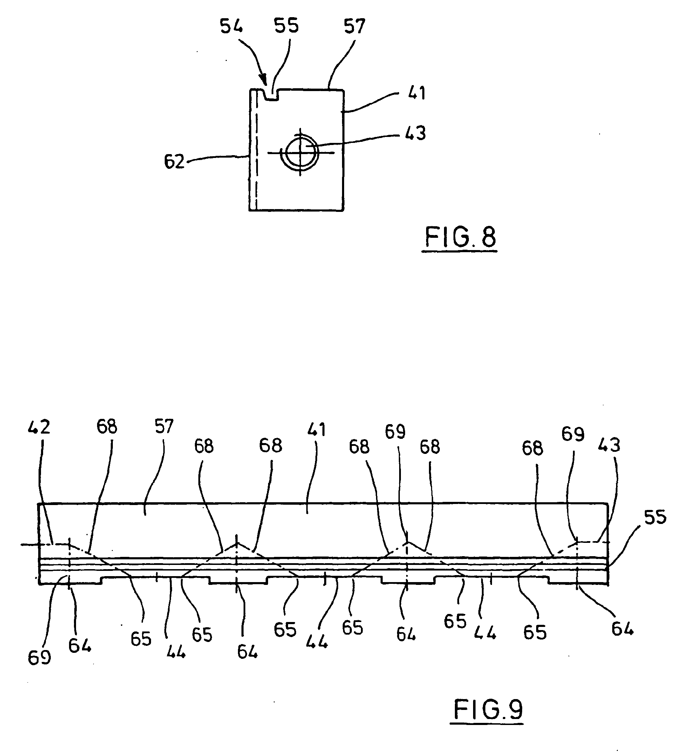

Fig. 8 veranschaulicht in einer Seitenansicht die Anordnung des im Bereich des Basiselementes (41) realisierten Teiles der Schnelljustierung (54). Wie bereits in Fig. 5 veranschaulicht, ist das im Bereich des Basiselementes (41) angeordnete Teil der Schnelljustierung (54) als nutartige Vertiefung (55) realisiert.

Fig. 9 veranschaulicht nochmals in einer Draufsicht den Verlauf der nutartigen Vertiefung (55) im Bereich der oberen Begrenzungsfläche (57). Gestrichelt sind die innerhalb des Basiselementes (41) verlaufenden Bohrungen (68) eingezeichnet.

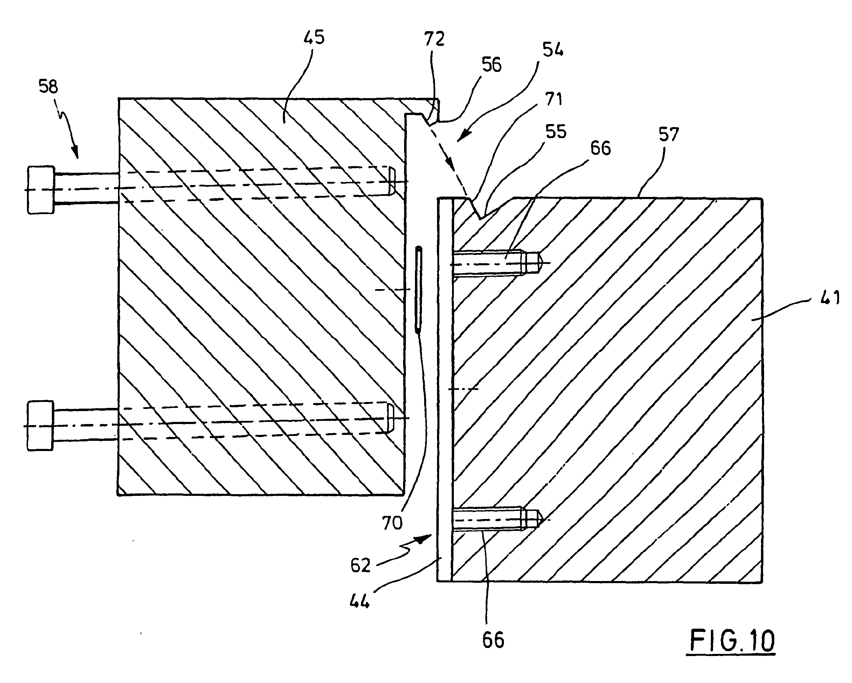

Fig. 10 veranschaulicht in einer vergrößerten und stärker detaillierten Darstellung die Funktion der Schnelljustierung (54) sowie der Endlagenfixierung (58). Fig. 10 veranschaulicht insbesondere, daß die Vertiefung (55) im Bereich ihrer der Frontseite (62) zugewandten Ausdehnung eine ausgehend von der oberen Begrenzungsfläche (57) schräg nach unten und in die Vertiefung (55) hinein verlaufende Gleitfläche (71) aufweist. Nach einem Einhängen des Vorsprunges (56) in die Vertiefung (55) wird der Vorsprung (56) mit einer ebenfalls schräg orientierten Kontaktfläche (72) aufgrund der Schwerkrafteinwirkung entlang der Gleitfläche (71) geführt und das Funktionsmodul (45) wird hierdurch mit seiner Anlagefläche (73) gegen die Frontseite (62) des Basiselementes (41) gezogen.

Nach einem Einhängen des Funktionsmoduls (45) in das Basiselement (41) ist eine Positionierung des Funktionsmoduls (45) relativ zum Basiselement (41) in einer vertikalen Richtung abgeschlossen. In einem anschließenden Justagevorgang braucht lediglich noch die horizontale Positionierung festgelegt zu werden. Bei der insbesondere in Fig. 9 erkennbaren Anordnung der Anschlußstellen (44) in einer Vertiefung der Frontseite (42) ist auch die horizontale Positionierung im Rahmen der ersten Schnelljustierung bereits zumindest im wesentlichen abgeschlossen.

Nach einem Anziehen der in Fig. 10 dargestellten Schraubenbolzen als Teil der Endlagenfixierung (58) ist der Montagevorgang abgeschlossen.

## Patentansprüche

1. Vorrichtung zur Blasformung von Behältern (2), die mindestens eine Blasstation (3), die mit einer Blasform (4) versehen ist und eine Einrichtung zur pneumatischen Steuerung aufweist, wobei die Blasstation (3) an die Einrichtung angeschlossen ist, und wobei die Einrichtung ein Basiselement aufweist, das eine Mehrzahl von pneumatischen Funktionsmodulen haltert, **dadurch gekennzeichnet, daß** das Basiselement (41) als ein pneumatischer Verteiler ausgebildet ist, der mindestens einen mindestens zwei Anschlußstellen (44) miteinander verbindenden Versorgungskanal aufweist und daß im Bereich mindestens einer Anschlußstelle (44) mindestens eines der Funktionsmodule (45) anordbar ist und daß das Basiselement (41) und mindestens eines der Funktionsmodule (45) sowohl von einer Schnelljustierung (54) als auch von einer Bndlagenfixierung (58) miteinander verbunden sind sowie bei der eine den Funktiorismodulen (45) zugewandte Frontseite (62) des Basiselementes (41) derart angeordnet ist, daß von der Schnelljustierung (54) eine vertikale Positionierung des Funktionsmoduls (45) vorgegeben ist.

2. Vorrichtung nach Anspruch 1, **dadurch gekennzeichnet, daß** sich der versorgungskanal mindestens bereichsweise mit einer Ausdehnungskomponente in Richtung einer Längsachse (67) des Basiselementes (41) erstreckt.

3. Vorrichtung nach Anspruch 1 oder 2, **dadurch gekennzeichnet, daß** eine Mehrzahl von Anschlußstellen (44) in Richtung der Längsachse (67) hintereinander angeordnet sind.

4. Vorrichtung nach einem der Ansprüche 1 bis 3, **dadurch gekennzeichnet, daß** mindestens zwei Anschlußstellen (44) auf einer Frontseite (62) des Basiselementes (41) nebeneinander angeordnet sind.

5. Vorrichtung nach einem der Ansprüche 1 bis 4, **dadurch gekennzeichnet, daß** der versorgungskanal mindestens bereichsweise innerhalb des Basiselementes (41) verläuft und in im Bereich der Anschlußstellen (44) angeordnete Anschlüsse (65) einmündet.

6. Vorrichtung nach einem der Ansprüche 1 bis 5, **dadurch gekennzeichnet, daß** der versorgungskanal aus mindestens zwei Bohrungen (68) ausgebildet ist, die ausgehend von zwei benachbarten Anschlußstellen (44) schräg in das Basiselement (41) hinein verlaufen.

7. Vorrichtung nach einem der Ansprüche 1 bis 6, **dadurch gekennzeichnet, daß** die Schnelljustierung (54) als eine Einhängeeinrichtung ausgebildet ist.

8. Vorrichtung nach einem der Ansprüche 1 bis 6, **dadurch gekennzeichnet, daß** die Schnelljustierung (54) als eine Einsteckeinrichtung ausgebildet ist.

9. Vorrichtung nach einem der Ansprüche 1 bis 6, **dadurch gekennzeichnet, daß** die Schnelljustierung (54) als eine Einrastvorrichtung ausgebildet ist.

10. Vorrichtung nach einem der Ansprüche 1 bis 6, **dadurch gekennzeichnet, daß** die Schnelljustierung (54) als eine Magnetvorrichtung ausgebildet ist.

11. Vorrichtung nach einem der Ansprüche 1 bis 10, **dadurch gekennzeichnet, daß** die Endlagenfixierung (58) als Verschraubung ausgebildet ist.

12. Vorrichtung nach einem der Ansprüche 1 bis 10, **dadurch gekennzeichnet, daß** die Endlagenfixierung (58) als Verklemmung ausgebildet ist.

13. Vorrichtung nach einem der Ansprüche 1 bis 10, **dadurch gekennzeichnet, daß** die Endlagenfixierung (58) als Verspannung ausgebildet ist.

14. Vorrichtung nach einem der Ansprüche 1 bis 13, **dadurch gekennzeichnet, daß** das Funktionsmodul (45) als Schaltventil (46) ausgebildet ist.

15. Vorrichtung nach einem der Ansprüche 1 bis 13, **dadurch gekennzeichnet, daß** das Funktionsmodul (45) als Filter (47) ausgebildet ist.

16. Vorrichtung nach einem der Ansprüche 1 bis 13, **dadurch gekennzeichnet, daß** das Funktionsmodul (45) als Regelventil (48) ausgebildet ist.

17. Vorrichtung nach einem der Ansprüche 1 bis 13, **dadurch gekennzeichnet, daß** das Funktionsmodul (45) als Druckbegrenzer (49) ausgebildet ist.

18. Vorrichtung nach einem der Ansprüche 1 bis 13, **dadurch gekennzeichnet, daß** das Funktionsmodul (45) als Entlüftung (50) ausgebildet ist.

19. Vorrichtung nach einem der Ansprüche 1 bis 13, **dadurch gekennzeichnet, daß** das Funktionsmodul (45) als Manometer (51) ausgebildet ist.

20. Vorrichtung nach einem der Ansprüche 1 bis 13, **dadurch gekennzeichnet, daß** das Funktionsmodul (45) als Differenzdruckmanometer (52) ausgebildet ist.

21. Vorrichtung nach einem der Ansprüche 1 bis 13, **dadurch gekennzeichnet, daß** das Funktionsmodul (45) als Taupunktsensor (53) ausgebildet ist.

22. Vorrichtung nach einem der Ansprüche 1 bis 21, **dadurch gekennzeichnet, daß** das Basiselement (41) einteilig ausgebildet ist.

23. Vorrichtung nach einem der Ansprüche 1 bis 21, **dadurch gekennzeichnet, daß** das Basiselement (41) aus mindestens zwei in Richtung der Längsachse (67) hintereinander angeordneten Elementsegmenten ausgebildet ist.

24. Vorrichtung nach einem der Ansprüche 1 bis 23, **dadurch gekennzeichnet, daß** das Basiselement (41) als Montagesockel einer Wartungseinheit ausgebildet ist.

25. Vorrichtung nach einem der Ansprüche 1 bis 24, **dadurch gekennzeichnet, daß** mindestens eines der Funktionsmodule (45) zur Steuerung der Blasluftversorgung einer Blasstation (3) ausgebildet ist.

26. Vorrichtung nach einem der Ansprüche 1 bis 25, **dadurch gekennzeichnet, daß** mindestens zwei Basiselemente (41) in Richtung der Längsachse (67) hintereinander angeordnet sind.

## Claims

1. Apparatus for the blow-moulding of containers (2), having at least one blowing station (3), provided with a blowing mould (4), and a device for pneumatic control, the blowing station (3) being connected to the device, and the device having a base element holding a plurality of pneumatic functional modules, **characterised in that** the base element (41) is designed as a pneumatic distributor having at least one supply channel interconnecting at least two connecting points (44), and **in that** at least one of the functional modules (45) can be arranged in the region of at least one connecting point (44), and **in that** the base element (41) and at least one of the functional modules (45) are interconnected both by a quick adjustment (54) and by an end-position fixing (58), and in which a front side (62) of the base element (41) facing the functional modules (45) is arranged in such a way that a vertical positioning of the functional module (45) is predetermined by the quick adjustment (54).

2. Apparatus according to Claim 1, **characterised in that** the supply channel extends, at least regionally, with an extension component in the direction of a longitudinal axis (67) of the base element (41).

3. Apparatus according to Claim 1 or 2, **characterised in that** a plurality of connecting points (44) are arranged one behind the other in the direction of the longitudinal axis (67).

4. Apparatus according to one of Claims 1 to 3, **characterised in that** at least two connecting points (44) are arranged one beside the other on a front side (62) of the base element (41).

5. Apparatus according to one of Claims 1 to 4, **characterised in that** the supply channel runs, at least regionally, inside the base element (41) and opens into connections (65) arranged in the region of the connecting points (44).

6. Apparatus according to one of Claims 1 to 5, **characterised in that** the supply channel is formed from at least two bores (68) running from two adjacent connecting points (44) obliquely into the base element (41).

7. Apparatus according to one of Claims 1 to 6, **characterised in that** the quick adjustment (54) is designed as a hook-in device.

8. Apparatus according to one of Claims 1 to 6, **characterised in that** the quick adjustment (54) is designed as a plug-in device.

9. Apparatus according to one of Claims 1 to 6, **characterised in that** the quick adjustment (54) is designed as a snap-in device.

10. Apparatus according to one of Claims 1 to 6, **characterised in that** the quick adjustment (54) is designed as a magnetic device.

11. Apparatus according to one of Claims 1 to 10, **characterised in that** the end-position fixing (58) is designed screwing.

12. Apparatus according to one of Claims 1 to 10, **characterised in that** the end-position fixing (58) is designed as clamping.

13. Apparatus according to one of Claims 1 to 10, **characterised in that** the end-position fixing (58) is designed as bracing.

14. Apparatus according to one of Claims 1 to 13, **characterised in that** the functional module (45) is designed as a switching valve (46).

15. Apparatus according to one of Claims 1 to 13, **characterised in that** the functional module (45) is designed as a filter (47).

16. Apparatus according to one of Claims 1 to 13, **characterised in that** the functional module (45) is designed as a regulating valve (48).

17. Apparatus according to one of Claims 1 to 13, **characterised in that** the functional module (45) is designed as a pressure limiter (49).

18. Apparatus according to one of Claims 1 to 13, **characterised in that** the functional module (45) is designed as venting (50).

19. Apparatus according to one of Claims 1 to 13, **characterised in that** the functional module (45) is designed as a manometer (51).

20. Apparatus according to one of Claims 1 to 13, **characterised in that** the functional module (45) is designed as a differential pressure manometer (52).

21. Apparatus according to one of Claims 1 to 13, **characterised in that** the functional module (45) is designed as a dewpoint sensor (53).

22. Apparatus according to one of Claims 1 to 21, **characterised in that** the base element (41) is designed in one piece.

23. Apparatus according to one of Claims 1 to 21, **characterised in that** the base element (41) is formed from at least two element segments arranged one behind the other in the direction of the longitudinal axis (67).

24. Apparatus according to one of Claims 1 to 23, **characterised in that** the base element (41) is designed as a mounting base of a maintenance unit.

25. Apparatus according to one of Claims 1 to 24, **characterised in that** at least one of the functional modules (45) is designed to control the blowing air supply of a blowing station (3).

26. Apparatus according to one of Claims 1 to 25, **characterised in that** at least two base elements (41) are arranged one behind the other in the direction of the longitudinal axis (67).

## Revendications

1. Dispositif pour le soufflage de récipients (2), qui présente au moins un poste de soufflage (3), qui est pourvu d'un moule de soufflage (4), et un système pour la commande pneumatique, le poste de soufflage (3) étant raccordé audit système, et ledit système présentant un élément de base qui maintient plusieurs modules fonctionnels pneumatiques, **caractérisé en ce que** l'élément de base (41) est réalisé sous la forme d'un distributeur pneumatique qui présente au moins un canal d'alimentation qui relie ensemble au moins deux points de raccordement (44), et **en ce que**, dans la région d'au moins un point de raccordement (44), peut être agencé au moins l'un des modules fonctionnels (45), et que l'élément de base (41) et au moins l'un des modules fonctionnels (45) sont reliés ensemble aussi bien par un système d'ajustage rapide (54) que par un système de fixation en position finale (58), ainsi que dans lequel une face frontale (62) de l'élément de base (41), orientée vers les modules fonctionnels (45), est agencée de sorte qu'un positionnement vertical du module fonctionnel (45) soit prédéfini par le système d'ajustage rapide (54).

2. Dispositif selon la revendication 1, **caractérisé en ce que** le canal d'alimentation s'étend, au moins par sections, avec une extension, dans la direction d'un axe longitudinal (67) de l'élément de base (41).

3. Dispositif selon la revendication 1 ou 2, **caractérisé en ce que** plusieurs points de raccordement (44) sont agencés les uns derrière les autres, dans la direction de l'axe longitudinal (67).

4. Dispositif selon l'une des revendications 1 à 3, **caractérisé en ce qu'**au moins deux points de raccordement (44) sont agencés l'un à côté de l'autre, sur un côté frontal (62) de l'élément de base (41).

5. Dispositif selon l'une des revendications 1 à 4, **caractérisé en ce que** le canal d'alimentation s'étend, au moins par sections, à l'intérieur de l'élément de base (41) et débouche dans des raccords (65), agencés dans la région des points de raccordement (44).

6. Dispositif selon l'une des revendications 1 à 5, **caractérisé en ce que** le canal d'alimentation est formé par au moins deux alésages (68) qui, partant de deux points de raccordement (44) voisins, pénètrent obliquement dans l'élément de base (41).

7. Dispositif selon l'une des revendications 1 à 6, **caractérisé en ce que** le système d'ajustage rapide (54) est réalisé sous la forme d'un dispositif d'accrochage.

8. Dispositif selon l'une des revendications 1 à 6, **caractérisé en ce que** le système d'ajustage rapide (54) est réalisé sous la forme d'un système d'emboîtement.

9. Dispositif selon l'une des revendications 1 à 6, **caractérisé en ce que** le système d'ajustage rapide (54) est réalisé sous la forme d'un dispositif d'encliquetage.

10. Dispositif selon l'une des revendications 1 à 6, **caractérisé en ce que** le système de fixation en position finale (54) est réalisé sous la forme d'un dispositif magnétique.

11. Dispositif selon l'une des revendications 1 à 10, **caractérisé en ce que** le système de fixation en position finale (58) est réalisé sous la forme d'un vissage.

12. Dispositif selon l'une des revendications 1 à 10, **caractérisé en ce que** le système de fixation en position finale (58) est réalisé sous la forme d'un blocage.

13. Dispositif selon l'une des revendications 1 à 10, **caractérisé en ce que** le système de fixation en position finale (58) est réalisé sous la forme d'un serrage.

14. Dispositif selon l'une des revendications 1 à 13, **caractérisé en ce que** le module fonctionnel (45) est réalisé en tant que vanne de commande (46).

15. Dispositif selon l'une des revendications 1 à 13, **caractérisé en ce que** le module fonctionnel (45) est réalisé en tant que filtre (47).

16. Dispositif selon l'une des revendications 1 à 13, **caractérisé en ce que** le module fonctionnel (45) est réalisé en tant que vanne de réglage (48).

17. Dispositif selon l'une des revendications 1 à 13, **caractérisé en ce que** le module fonctionnel (45) est réalisé en tant que limiteur de pression (49).

18. Dispositif selon l'une des revendications 1 à 13, **caractérisé en ce que** le module fonctionnel (45) est réalisé en tant que dispositif d'évacuation d'air (50).

19. Dispositif selon l'une des revendications 1 à 13, **caractérisé en ce que** le module fonctionnel (45) est réalisé en tant que manomètre (51).

20. Dispositif selon l'une des revendications 1 à 13, **caractérisé en ce que** le module fonctionnel (45) est réalisé en tant que manomètre à pression différentielle.

21. Dispositif selon l'une des revendications 1 à 13, **caractérisé en ce que** le module fonctionnel (45) est réalisé en tant que détecteur du point de rosée (53).

22. Dispositif selon l'une des revendications 1 à 21, **caractérisé en ce que** l'élément de base (41) est formé d'une pièce.

23. Dispositif selon l'une des revendications 1 à 21, **caractérisé en ce que** l'élément de base (41) est formé par au moins deux segments d'élément disposés l'un derrière l'autre, dans la direction de l'axe longitudinal (67) .

24. Dispositif selon l'une des revendications 1 à 23, **caractérisé en ce que** l'élément de base (41) est réalisé en tant que socle de montage d'une unité d'entretien.

25. Dispositif selon l'une des revendications 1 à 24, **caractérisé en ce que** l'un des modules fonctionnels (45) au moins est conçu pour la commande de l'alimentation en air de soufflage d'un poste de soufflage (3).

26. Dispositif selon l'une des revendications 1 à 25, **caractérisé en ce que** deux éléments de base (41) au moins sont agencés, l'un derrière l'autre, dans la direction de l'axe longitudinal (67).
